# FASCICULE DE BREVET EUROPEEN

(11) **EP 4 237 663 B1**
(45) Date de publication et mention de la délivrance du brevet: **27.11.2024**
(21) Numéro de dépôt: 21810407.3
(22) Date de dépôt: 22.10.2021
(51) Int. Cl.: F01D 5/02, F01D 25/16, F02C 7/06

(54) **DISPOSITIF DE PRESSURISATION D'UNE ENCEINTE AVAL DE TURBOMACHINE ET TURBOMACHINE CORRESPONDANTE**
DRUCKAUFBAUVORRICHTUNG EINES LAGERSBEHÄLTERS ABWÄRTS EINER TURBOMASCHINE AND ENTSPRECHENDE TURBOMACHINE
SYSTEM FOR PRESSURISATION OF A BEARING CONTAINER DOWNWARDS OF A TURBOMACHINE AND CORRESPONDING TURBOMACHINE

(30) Priorité: 27.10.2020 FR 2010983
(43) Date de publication de la demande: 06.09.2023
(73) Titulaire: SAFRAN AIRCRAFT ENGINES, 75015 Paris (FR)
(72) Inventeur: GROS-BOROT, Maeva Daphné, 77550 MOISSY-CRAMAYEL (FR); MOUTON, Clémentine Charlotte Marie, 77550 MOISSY-CRAMAYEL (FR)
(74) Mandataire: Gevers & Orès
(86) Numéro de dépôt international: PCT/FR2021/051863
(87) Numéro de publication internationale: WO 2022/090654

(56) Documents cités:
- US-A1- 2014 150 449
- US-A1- 2020 088 053
- US-B1- 6 582 187

## Description

### Domaine de l'invention

La présente invention concerne le domaine des turbomachines et en particulier un dispositif de pressurisation d'une enceinte aval de turbomachine. Elle vise également la turbomachine correspondante.

### Arrière-plan technique

L'art antérieur comprend les documents US-A1 -2014/150449, qui montre les caractéristiques techniques du préambule de la revendication indépendante 1, US-A1-2020/088053 et US-B1-6582187.

Les turbomachines comprennent généralement un arbre moteur guidé en rotation par des paliers de guidage en rotation. Ces paliers sont agencés dans une ou plusieurs enceinte(s) de lubrification étanche(s) dans chacune desquelles règne un brouillard de lubrification des paliers. Les enceintes sont pressurisées de manière à maintenir le lubrifiant à l'intérieur de celles-ci. La fuite de lubrifiant à l'extérieur de l'enceinte pourrait créer un risque d'inflammation et de balourds dans la turbomachine, une consommation excessive de lubrifiant, et/ou un risque de pollution de la cabine de l'aéronef également. Les enceintes sont généralement délimitées par des parois qui sont formées au moins en partie par des carters fixes, carters de rotor, supports de paliers et/ou d'une portion de l'arbre moteur. Des moyens d'étanchéité sont prévus dans les zones où les parties fixes et mobiles se rejoignent. Ainsi, une enceinte de palier comprend en général deux moyens d'étanchéité situés en amont et en aval de l'enceinte. Les enceintes sont mises sous pression car les moyens d'étanchéité ne peuvent assurer une étanchéité parfaite. En effet, les moyens d'étanchéité sont conditionnés de sorte qu'un filet d'air permanent pénètre depuis l'extérieur de l'enceinte vers l'intérieur de celle-ci en les traversant, et empêche ainsi le lubrifiant de sortir de l'enceinte en les traversant. La pression autour de l'enceinte est plus importante que la pression au sein de l'enceinte pour entretenir le passage du filet d'air au travers des moyens d'étanchéité de l'extérieur de l'enceinte vers l'intérieur de celle-ci. Cet air provient généralement d'une source d'air sous pression, notamment des compresseurs haute pression ou basse pression.

Dans le cas d'une turbomachine présentant une « zone core » (autour de la chambre de combustion) de taille très faible, des contraintes d'intégration peuvent apparaître au niveau du passage d'un arbre moteur tel que l'arbre de turbine basse pression dans la « zone core » qui est plus petite que d'habitude. La taille de la « zone core » nécessite d'avoir un arbre de petit diamètre (inférieur à 100 mm) qui ne permet pas de passer un couple trop important limitant la capacité de passage de couple de torsion par celui-ci.

La pressurisation de l'enceinte aval d'une turbomachine est classiquement réalisée par un flux d'air pressurisation (ou de ventilation) qui est prélevé au niveau du compresseur haute pression, la plupart du temps en amont de la « zone core ». La présence de perçages réalisés à certains endroits des arbres moteurs permettant le passage du flux d'air de pressurisation vers l'enceinte aval, nécessite des surépaisseurs locales au niveau de ceux-ci afin de compenser les concentrations de contraintes, pouvant empêcher le montage de ces arbres, tels que l'arbre basse pression traversant la « zone core » de plus petite dimension. Le document US-B1-6582187 comprend des perçages au niveau de moyen de connexion en amont pour la circulation d'un flux d'air de refroidissement vers l'intérieur des disques de compresseur ou de turbine. Ces perçages ne pourraient être réalisés sur un moteur de petite dimension.

### Résumé de l'invention

L'objectif de la présente invention est de fournir une pressurisation d'une enceinte aval de turbomachine sans impacter la masse et affecter l'architecture de celle-ci.

Nous parvenons à cet objectif, conformément à l'invention, grâce à un dispositif de pressurisation d'une enceinte aval de turbomachine d'axe longitudinal X tel que celui présenté dans la revendication 1, c'est à dire un dispositif qui est alimenté au moyen d'un flux d'air de pressurisation prélevé en amont de la turbomachine suivant l'axe longitudinal, le dispositif comprenant :
- une première portion d'arbre s'étendant suivant l'axe longitudinal X,
- une deuxième portion d'arbre couplée à la première portion d'arbre via des cannelures internes longitudinales portées par la première portion d'arbre et des cannelures externes longitudinales portées par la deuxième portion d'arbre, la deuxième portion d'arbre s'étendant au moins en partie à l'intérieur de la première portion d'arbre avec une distance radiale suivant un axe radial Z perpendiculaire à l'axe longitudinal X, le dispositif comprenant au moins un premier passage réalisé au travers les cannelures internes et externes, et au moins un orifice traversant la deuxième portion d'arbre de part et d'autre suivant l'axe radial, l'orifice étant agencé en amont du premier passage et d'une part, étant en communication fluidique avec le premier passage et d'autre part, débouchant à l'intérieur de la deuxième portion d'arbre de sorte à permettre la circulation du flux d'air de pressurisation depuis le premier passage entre la première portion d'arbre et la deuxième portion d'arbre, puis à travers l'orifice vers l'enceinte aval de la turbomachine.

Ainsi, cette solution permet d'atteindre l'objectif susmentionné. En particulier, une telle configuration permet de pressuriser l'enceinte aval en faisant circuler le flux d'air de pressurisation entre le point de prélèvement (situé au niveau du compresseur haute pression) jusqu'à l'enceinte aval de la turbomachine (en particulier de la turbine basse pression). L'emplacement de l'orifice dans la deuxième portion d'arbre situé en amont des cannelures permet d'éviter de percer la deuxième portion d'arbre sur une zone où le couple passe, ce qui entraînerait une surépaisseur de l'arbre au niveau du perçage pour tenir la concentration de contrainte (les efforts qui passent dans la deuxième portion d'arbre se trouvent au niveau des cannelures et en aval des cannelures, il n'y a aucun effort qui passe dans l'arbre sur la partie située en amont des cannelures). Par ailleurs, l'orifice dans un arbre et le passage entre les cannelures des arbres sont simples à réaliser et sans entraîner de modification structurelles conséquentes des pièces existantes de la turbomachine.

Le dispositif comprend également l'une ou plusieurs des caractéristiques suivantes, prises seules ou en combinaison :
- les cannelures internes et externes comprennent des faces en contact les unes avec les autres.
- la première portion d'arbre est un arbre de compresseur basse pression.
- la deuxième portion d'arbre est un arbre de turbine basse pression.
- les cannelures internes et externes sont configurées de manière à créer des paires de cannelures internes et externes de manière adjacente suivant une direction circonférentielle et des espaces inter-cannelures vides formant des premiers passages.
- les premiers passages occupent une plage angulaire α, mesurée entre un flanc latéral d'une cannelure interne ou externe et un autre flanc latéral d'une cannelure interne ou externe qui sont espacées, et qui est comprise entre 35° et 55°.
- les premiers passages sont alternées avec des séries de cannelures ayant des faces en contact les unes avec les autres suivant la direction circonférentielle.
- la première portion d'arbre ou la deuxième portion d'arbre comprend une série de dents qui sont agencées en aval des cannelures internes et externes et configurée de manière à réaliser une fonction de centrage de la première portion d'arbre par rapport à la deuxième portion d'arbre.
- au moins un deuxième passage est réalisé au travers des dents.
- les dents sont espacées des unes des autres suivant une direction circonférentielle de manière à créer des espaces inter-dentaires vides formant des deuxièmes passages.
- les cannelures internes et externes ont une section transversale de forme et dimensions similaires et les dents ont chacune une section transversale de forme et dimension similaire.
- les premiers passages et les deuxièmes passages sont régulièrement répartis autour de l'axe longitudinal.
- la première portion d'arbre comprend au moins une ouverture traversant sa paroi de part et d'autre, l'ouverture étant située en aval du deuxième passage et étant destinée à déboucher à l'intérieur de la première portion d'arbre.
- le dispositif de pressurisation comprend un premier arbre comportant la première portion d'arbre et la deuxième portion d'arbre, et un deuxième arbre à l'intérieur duquel s'étend au moins en partie le premier arbre, le deuxième arbre comprenant au moins un trou traversant sa paroi de part et d'autre, le trou étant destiné à être agencé à proximité de l'enceinte aval de manière que le flux d'air de pressurisation en sortie du ou des orifice(s) pénètre à l'intérieur de l'enceinte aval.
- la première portion d'arbre comprend plusieurs orifices qui sont répartis régulièrement autour de l'axe longitudinal.
- les cannelures sont rectilignes et parallèle à l'axe longitudinal.
- le nombre de cannelures longitudinales internes est inférieur ou supérieur au nombre de cannelures longitudinales externes.

L'invention concerne également une turbomachine d'aéronef comprenant une hélice, un générateur de gaz destiné à entrainer l'hélice en rotation autour de l'axe longitudinal X et un dispositif de pressurisation d'une enceinte aval tel que susmentionné.

Suivant une caractéristique, l'enceinte aval est agencée en aval d'une chambre de combustion du générateur de gaz.

L'invention concerne en outre un aéronef comprenant une turbomachine telle que susmentionnée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 représente suivant une coupe axiale un exemple de turbomachine qui comprend une seule hélice et un redresseur des aubes de stator à laquelle s'applique l'invention ;
[Fig. 2] La figure 2 illustre un exemple d'enceinte aval suivant une coupe axiale qui renferme au moins un palier selon l'invention ;
[Fig. 3] La figure 3 est une vue en coupe axiale, partielle et de détail d'un arbre interne et d'un arbre externe faisant partie d'un dispositif de pressurisation selon l'invention ;
[Fig. 4] La figure 4 représente suivant une coupe axial des moyens d'accouplement coopérant les uns avec les autres pour solidariser les arbres interne et externe en rotation et des moyens de centrage des arbres selon l'invention ;
[Fig. 5] La figure 5 est une vue partielle et en suivant une coupe A-A d'un arbre interne et d'un arbre externe illustrés sur la figure 4 et munis de cannelures d'accouplement selon l'invention;
[Fig. 6] La figure 6 est une vue partielle et en suivant une coupe B-B d'un arbre interne et d'un arbre externe illustrés sur la figure 4 et munis de dents de centrage selon l'invention; et
[Fig. 7] La figure 7 illustre suivant une coupe axiale un exemple de trajet d'un flux d'air de pressurisation vers l'enceinte aval selon l'invention.

### Description détaillée de l'invention

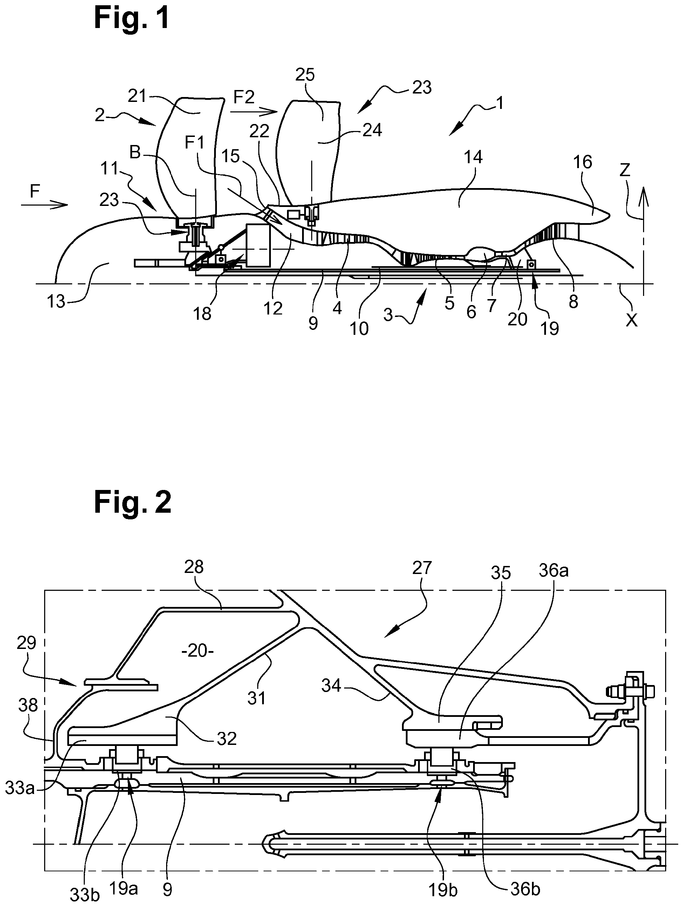

L'invention s'applique à une turbomachine 1 à rendement propulsif élevé (faible taille de corps haute pression). L'exemple de turbomachine qui est illustrée sur la figure 1 comprend une seule hélice 2 et un redresseur 25 en aval de l'hélice 2. Cette hélice 2 est non carénée. La turbomachine est destinée à être montée sur un aéronef. Une telle turbomachine est un turbopropulseur tel que représenté sur la figure 2. Cette turbomachine est connue sous l'expression anglaise « Single Unducted Fan » comme explicité précédemment. Bien entendu l'invention s'applique à d'autres types de turbomachine et en particulier dont la taille est inférieure à une turbomachine classique (un turboréacteur double flux et double corps par exemple).

Dans la présente invention, et de manière générale, les termes « amont », « aval » « axial » et « axialement » sont définis par rapport à la circulation des gaz dans la turbomachine et ici suivant l'axe longitudinal X (et même de gauche à droite sur la figure 2). De même, les termes « radial », « interne » et « externe » sont définis par rapport à un axe radial Z perpendiculaire à l'axe longitudinal X et au regard de l'éloignement par rapport à l'axe longitudinal X.

Par ailleurs, les éléments identiques ou sensiblement identiques et/ou avec les mêmes fonctions sont représentés par les mêmes références numériques.

Sur la figure 1, la turbomachine 1 comprend un générateur de gaz 3 qui comporte typiquement d'amont en aval, un compresseur basse pression 4, un compresseur haute pression 5, une chambre de combustion 6, une turbine haute pression 7 et une turbine basse pression 8. Le compresseur basse pression 4 et la turbine basse pression 8 sont reliés mécaniquement par un arbre basse pression 9 de manière à former un corps basse pression. Le compresseur haute pression 5 et la turbine haute pression 7 sont reliés mécaniquement par un arbre haute pression 10 de manière à former un corps haute pression. L'arbre basse pression 9 s'étend à l'intérieur de l'arbre haute pression 10et sont coaxiaux.

Dans une autre configuration non représentée, le corps basse pression ou de faible pression comprend le compresseur basse pression qui est relié à une turbine de pression intermédiaire. Une turbine libre de puissance est montée en aval de la turbine de pression intermédiaire et est reliée à l'hélice décrite ci-après via un arbre de transmission de puissance pour l'entraîner en rotation.

L'hélice 2 est formée d'une couronne de pales 21 mobiles qui s'étendent depuis un carter rotatif 11 mobile en rotation autour de l'axe longitudinal. Dans l'exemple représenté de la figure 2, l'hélice 2 est montée en amont du générateur de gaz (configuration de tracteur ou « puller » en anglais). De manière alternative, l'hélice est montée en aval du générateur de gaz (configuration de pousseur ou « pusher » en anglais).

Le redresseur 23 comprend une pluralités d'aubes de stator 24 (ou aubes fixes) connues sous l'acronyme anglais « OGV » pour Outlet Guide Vane. Les aubes de stator 24 sont réparties régulièrement autour de l'axe longitudinal X. Les aubes de stator 24 peuvent être à calage variable.

Un flux d'air F qui entre dans la turbomachine se divise en un flux d'air primaire et en un flux d'air secondaire F2 au niveau d'un bec de séparation 22 porté par un carter externe 14. Le flux d'air primaire F1 circule dans une veine primaire 12 qui traverse le générateur de gaz 3 (radialement entre un carter interne 13 et le carter externe 14) via une entrée d'air annulaire 15 et s'en échappe par une tuyère primaire 16 qui est disposée en aval du générateur de gaz 3. Le flux d'air secondaire F2 traverse les pales 21 de l'hélice, les pales 25 du redresseur 23 et circule autour du carter externe 14. L'arbre de puissance ou l'arbre basse pression 9 (respectivement de la turbine libre de puissance et de la turbine basse pression) entraîne l'hélice 2 qui comprime le flux d'air à l'extérieur du carter externe 14 et fournit la majeure partie de la poussée. Eventuellement, un réducteur 18 est interposé entre l'hélice 2 et l'arbre de puissance comme cela est représenté sur la figure 2. Le réducteur 18 peut être de type à train planétaire ou à train épicycloïdal.

L'arbre basse pression 9 est entrainé en rotation autour de l'axe longitudinal au moyen de paliers de guidage en rotation. Ces paliers sont montés en amont et en aval de l'arbre basse pression 9 et sont logés dans des enceintes de lubrification. Comme nous l'avons vu précédemment, ces enceintes doivent être pressurisées pour maintenir le brouillard de lubrifiant (ici de l'huile) à l'intérieur des enceintes. De manière générale, plus la pression à l'extérieur de celle-ci est élevée, plus il est facile d'en assurer l'étanchéité. La pression à l'extérieur est assurée par un circuit de pressurisation ou un dispositif de pressurisation 30 alimenté en un flux d'air de pressurisation ou de ventilation.

En particulier, au moins un palier aval 19 (figure 2) est agencé dans une enceinte 20 aval annulaire qui est centrée sur l'axe longitudinal X. L'enceinte 20 annulaire représentée plus en détail sur la figure 2 est agencée en aval du compresseur haute pression 5. L'enceinte 20 aval est délimitée au moins en partie par un support de palier 27 qui comprend un paroi radialement externe amont 28 qui est fixée à une structure fixe de la turbomachine. La paroi radialement externe 28, coopère via les moyens d'étanchéité amont 29 avec une virole 38 fixée à l'arbre basse pression 9. Le support de palier 27 comprend également dans cet exemple une première banche amont 31 qui porte à une première extrémité une semelle amont 32. Cette semelle amont 32 est fixée à une bague externe 33a d'un premier palier aval 19a. Le support de palier 27 comprend également une deuxième branche 34 qui porte à une première extrémité une semelle aval 35. Cette dernière est fixée à une bague externe 36a d'un deuxième palier aval 19b. L'enceinte 20 est également délimitée en partie par une paroi radialement interne. Une portion de l'arbre basse pression 9 forme une partie de paroi radialement interne de l'enceinte aval 20. L'arbre basse pression 9, et en particulier, l'arbre du compresseur basse pression décrit ultérieurement) porte les bagues internes 33b, 36b des premier et deuxième paliers aval 19a, 19b.

Les moyens d'étanchéités 29 comprennent généralement un joint labyrinthe ou un joint radial segmenté.

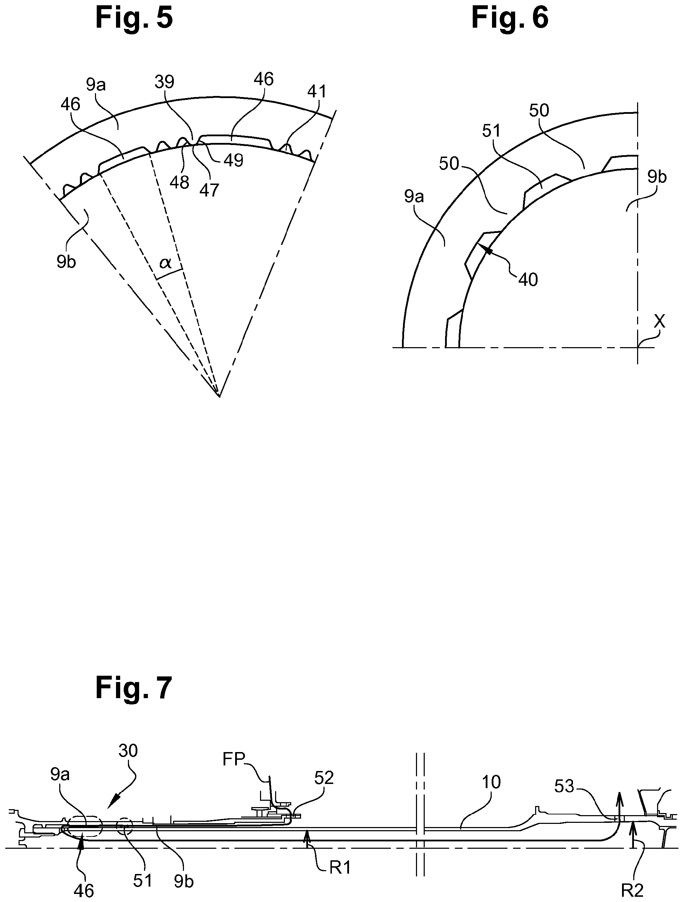

En référence à la figure 7, le flux d'air de pressurisation FP est prélevé en amont de la turbomachine et en particulier des premiers étages du compresseur haute pression 5. Le dispositif de pressurisation 30 est configuré de manière à permettre la circulation du flux d'air de pressurisation, entre un premier arbre et un deuxième arbre, du compresseur haute pression 5 jusqu'à l'enceinte aval 20. Pour cela, le dispositif de pressurisation 30 comprend une première portion d'arbre 9a s'étendant suivant l'axe longitudinal X et une deuxième portion d'arbre couplée à la première portion d'arbre 9a via des moyens d'accouplement décrits ci-après. En particulier, le dispositif de pressurisation 30 comprend le premier arbre qui s'étend suivant l'axe longitudinal X et un deuxième arbre qui s'étend au moins en partie à l'extérieur du premier arbre et qui est coaxial à l'axe X. Le premier arbre est alors creux. Le deuxième arbre est également creux. Le deuxième arbre s'étend radialement à distance du premier arbre de sorte à permettre la circulation du flux d'air de pressurisation entre leurs surfaces interne et externe.

Dans le présent exemple, le premier arbre est l'arbre basse pression 9 et le deuxième arbre est l'arbre haute pression 10

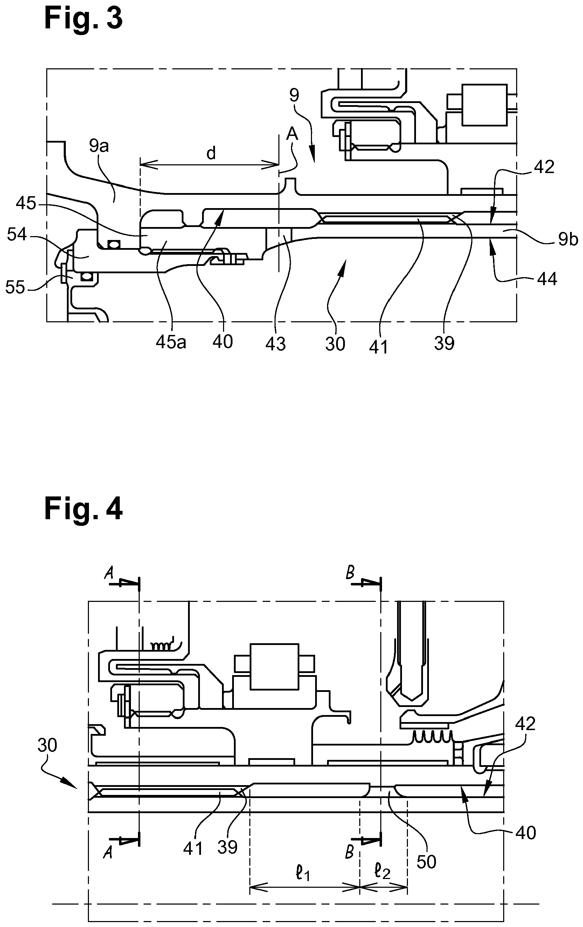

En référence aux figures 3 et 4, l'arbre basse pression 9 comprend un arbre de compresseur basse pression 9a et un arbre de turbine basse pression 9b qui sont solidaires en rotation grâce à des moyens d'accouplement. La première portion d'arbre est l'arbre de compresseur basse pression et la deuxième portion d'arbre est l'arbre de turbine basse pression. Les moyens d'accouplement comprennent des cannelures internes 39 longitudinales qui sont portées par sur une surface interne 40 de l'arbre de compresseur basse pression 9a. Les cannelures internes 39 s'étendent radialement vers l'intérieur de l'arbre du compresseur basse pression 9a depuis la surface interne 40. Les moyens d'accouplement comprennent également cannelures externes 41 longitudinales qui sont portées par la surface externe 42 de l'arbre de turbine basse pression 9b. Les cannelures externes 41 s'étendent radialement vers l'extérieur de l'arbre de turbine basse pression 9b depuis la surface externe 42. Les cannelures internes et externes 39, 41 s'étendent suivant l'axe longitudinal et sont réparties autour de l'axe longitudinal X. Celles-ci sont rectilignes. L'accouplement des cannelures 39, 41 permet la transmission d'un couple de l'arbre de turbine basse pression 9b à l'arbre du compresseur basse pression 9a.

En référence aux figures 3 et 5, le dispositif de pressurisation 30 comprend au moins un premier passage 46 réalisé au travers les cannelures internes et externes 39, 41. Sur la figure 5 qui représente une vue en coupe A-A des arbres de la figure 4, les cannelures 39, 41 sont configurées de manière à créer des paires de cannelures internes et externes 39, 41 adjacentes, suivant une direction circonférentielle autour de l'axe longitudinal et aussi des espaces inter-cannelures vides formant le premier passage 46.

Pour cela, les cannelures présentent une forme et des dimensions sensiblement similaires de sorte que, lors de leur accouplement, toutes les faces sont en contact l'une de l'autre. Les cannelures, dans le présent exemple, présentent une forme générale trapézoïdale. En particulier, chaque cannelure 39, 41 comporte un sommet 47 qui est ici plat et qui est délimité par deux flanc latéraux 48, 49. Dans le présent exemple, les flancs latéraux 48, 49 sont définis dans des plans qui sont inclinés l'un par rapport à l'autre et respectivement par rapport à l'axe radial. L'angle d'inclinaison est ici compris entre 30° et 60°. Les flancs pourraient être droit bien entendu ou encore avoir d'autres formes dès lors que celles-ci coopèrent entre eux et soient en contact.

Plusieurs premiers passages 46 sont agencés régulièrement autour de l'axe longitudinal. Sur la figure 5 sont représentés deux de ces premiers passages 46 qui sont espacés l'un de l'autre par des cannelures internes et externes 39, 41. Les premiers passages 46 s'étendent suivant une direction circonférentielle. Les premier passages 46 occupent une plage angulaire (longueur circonférentielle) α, mesurée entre un flanc latéral d'une cannelure interne ou externe et un autre flanc latéral d'une cannelure interne ou externe qui sont espacées. La plage angulaire peut être comprise entre 35° et 55°. Ces premiers passages 46 ont été créés par la « suppression » de cannelure internes et/ou de cannelures externes. Dans ce cas les nombres de cannelures internes et externes sont différents. Le nombre des cannelures internes est inférieur ou supérieur au nombre de cannelures externes. Sur l'exemple illustré, il y a plus de cannelures internes que de cannelures externes. Nous pouvons voir sur la figure 5, qu'il y a entre chaque premier passage 46 trois cannelures internes 39 s'accouplant avec deux cannelures externes 41. Le flux d'air de pressurisation FP passe uniquement à travers les premiers passages 46. ; les faces (sommets/flancs latéraux) des cannelures étant en contact (serré) l'une avec l'autre. Celles-ci créent une étanchéité ou bloquent le passage du flux FP. En d'autres termes, les passages 38 sont plus larges que de simples espaces formés par un éventuel jeu entre des faces adjacentes et en contact des cannelures comme c'est le cas dans certaines turbomachines de l'art antérieur. L'air pressurisé circule sans obstacle et sans perte de pression vers l'enceinte amont à pressuriser avec une telle configuration.

Sur la figure 3, le dispositif de pressurisation 30 comprend au moins un orifice 43 qui traverse la paroi de l'arbre de turbine basse pression 9b de part et d'autre. L'axe A de l'orifice 43 est parallèle à l'axe radial Z. L'orifice comprend une entrée et une sortie. L'entrée est en regard d'une portion de surface interne 40 de l'arbre compresseur basse pression 9b. L'orifice 43 est agencé en amont des cannelures 39, 41. Un tel agencement permet d'éviter de percer l'arbre au niveau des moyens de connexion qui sont ici des cannelures pour ne pas entrainer de surépaisseur de l'arbre au niveau du perçage et tenir la concentration de contrainte. Plusieurs orifices 43 sont réalisés dans la paroi et sont distribués régulièrement autour de l'axe X. En particulier, chaque orifice 43 débouche d'une part, dans la surface externe 42 de l'arbre de turbine basse pression 9b et d'autre part, dans la surface interne 44 de l'arbre de turbine basse pression 9b. En d'autres termes, l'orifice 43 débouche à l'intérieur de l'arbre de turbine basse pression 9b.

Chaque orifice 43 est situé à proximité d'une extrémité 45 de l'arbre de turbine basse pression 9b. En particulier, l'axe A de chaque orifice 43 est situé à une distance d prédéterminée de l'extrémité 45. La distance entre l'axe A et l'extrémité 45 définit une portion d'extrémité 45a sur laquelle est vissé un écrou 54. Ce dernier permet de serrer l'arbre de turbine basse pression 9b et l'arbre de compresseur basse pression 9a. Cette portion d'extrémité 45a a été « ajoutée » sur l'arbre de turbine basse pression 9b par rapport à un arbre de turbine basse pression classique. La portion d'extrémité 45a a permis d'ajouter les orifices 43. Un organe anti-rotation 55 est prévu pour s'opposer à la rotation de l'écrou 54 de serrage. L'organe anti-rotation est monté radialement à l'intérieur de l'écrou 54. L'organe anti-rotation 55 a également pour fonction de bouchon d'étanchéité et permet d'empêcher les fuites d'huile.

Chaque orifice 43 est situé en amont d'au moins un premier passage 46 et est en communication fluidique avec le premier passage 46 de sorte à permettre la circulation du flux d'air pressurisé depuis l'amont entre les arbres 9a, 9b concentriques vers l'enceinte aval 20 de la turbomachine.

L'arbre de compresseur basse pression 9a et l'arbre de turbine basse pression 9b comprennent des moyens de centrage sur l'axe longitudinal X. Ces moyens de centrage comprennent des dents 50 ici internes qui sont portées par l'arbre de compresseur basse pression 9a. Ces dents 50 s'élèvent radialement depuis la surface interne 40 vers l'arbre de turbine basse pression 9b. Alternativement, les dents sont agencées sur la surface externe de l'arbre de turbine basse pression. Les dents 50 présentent des formes et des dimensions sensiblement similaires. Comme pour les cannelures, chaque dent 50 comprend un sommet plat et des flancs latéraux plans. Le sommet de chaque dent 50 est en appui contre la surface externe de l'arbre de compresseur basse pression 9a. Ces dents 50 sont placées en aval des cannelures internes et externes 33, 34.

Le dispositif de pressurisation 30 comprend également au moins un deuxième passage 51 qui est réalisé au travers les dents 50. Comme pour les cannelures 39, 41, les dents 50 sont espacées l'une dans l'autre de manière à créer des espaces inter-dents vides formant les deuxièmes passages 51. De la sorte, le flux d'air de pressurisation FP circule entre deux dents 50 adjacentes mais espacées l'une de l'autre. Les deuxièmes passages 51 sont répartis autour de l'axe longitudinal.

Comme nous pouvons le voir également sur la figure 4, les dents sont séparées axialement des cannelures internes et/ou externe d'une première distance l1 qui est supérieure à la dimension axiale l2 des dents 50. Dans l'exemple illustré, la distance l1 est inférieure à la dimension axiale des cannelures.

Sur la figure 7, l'arbre de compresseur basse pression 9a comprend, vers le compresseur haute pression 5, au moins une ouverture 52 qui traverse sa paroi de part et d'autre radialement. En d'autres termes, l'ouverture 52 est située axialement en aval des deuxièmes passages 51 et débouche à l'intérieur de l'arbre de compresseur basse pression 9a. En particulier, l'arbre 9a comprend plusieurs ouvertures 52 réparties régulièrement autour de l'axe X. Comme nous pouvons le voir également, l'arbre haute pression 10 comprend au moins un trou 53 qui traverse sa paroi de part et d'autre et qui est à l'aval du corps haute pression, près de la turbine basse pression d'axe parallèle à l'axe radial Z. Le trou 53 est situé à l'aval du corps haute pression et près de la turbine basse. Avantageusement, plusieurs trous 53 sont répartis sur la circonférence de l'arbre haute pression 10. Les trous sont agencés axialement en aval des orifices 43

De la sorte, le flux d'air de pressurisation FP qui est prélevé au niveau du compresseur haute pression 5, traverse les ouvertures 52 de l'arbre de compresseur basse pression9a, circule entre la surface interne de l'arbre de compresseur basse pression 9a et la surface externe de l'arbre de turbine basse pression 9b jusqu'aux deuxièmes passages 51 (comme représenté en pointillé sur la figure 7), puis vers le premier passage 46 (comme représenté en pointillé sur la figure 7) avant de s'introduire à l'intérieur de l'arbre de turbine basse pression 9b et d'être évacué par les trous 53. La différence de pression entre l'amont et l'aval permet la circulation du flux d'air de pressurisation. Les différents passages, trous orifices, permettent de minimiser les pertes de charge et donc de conserver la pression depuis l'alimentation du flux d'air de pressurisation.

## Revendications

1. Dispositif de pressurisation (30) d'une enceinte aval (20) de turbomachine (1) d'axe longitudinal X qui est alimenté au moyen d'un flux d'air de pressurisation (FP), le dispositif (30) comprenant :
- une première portion d'arbre (9a) s'étendant suivant l'axe longitudinal X,
- un deuxième portion d'arbre (9b couplée à la première portion d'arbre (9a) via des cannelures internes (39) longitudinales portées par la première portion d'arbre (9a) et des cannelures externes (41) longitudinales portées par la deuxième portion d'arbre (9b, la deuxième portion d'arbre (9b) s'étendant au moins en partie à l'intérieur de la première portion d'arbre (9a) avec une distance radiale suivant un axe radial Z perpendiculaire à l'axe longitudinal X, les cannelures internes et externes comprenant respectivement des faces,
- au moins un premier passage (46) réalisé au travers les cannelures internes et externes (39, 41), et
- au moins un orifice (43) traversant la deuxième portion d'arbre (9b) de part et d'autre suivant l'axe radial,
**caractérisé en ce que** le flux de pressurisation est prélevé en amont de la turbomachine suivant l'axe longitudinal, l'orifice (43) étant agencé en amont du premier passage (46) et d'une part, étant en communication fluidique avec le premier passage (46) et d'autre part, débouchant à l'intérieur de la deuxième portion d'arbre (9b) de sorte à permettre la circulation du flux d'air de pressurisation (FP) depuis le premier passage (46) entre la première portion d'arbre (9a) et la deuxième portion d'arbre (9b), puis à travers l'orifice (43) vers l'enceinte aval (20) de la turbomachine, et **en ce que** les cannelures internes et externes (39,41) sont configurées de manière à créer des paires de cannelures internes et externes de manière adjacente suivant une direction circonférentielle, avec des faces en contact les unes avec les autres, et des espaces inter-cannelures vides formant des premiers passages (46).

2. Dispositif de pressurisation (30) selon la revendication précédente, **caractérisé en ce que** les premiers passages (46) occupent une plage angulaire (α), mesurée entre un flanc latéral d'une cannelure interne ou externe et un autre flanc latéral d'une cannelure interne ou externe qui sont espacées, et qui est comprise entre 35° et 55°.

3. Dispositif de pressurisation (30) selon l'une des revendications précédentes, **caractérisé en ce que** la première portion d'arbre (9a) ou la deuxième portion d'arbre (9b) comprend une série de dents (50) qui sont agencées en aval des cannelures internes et externes et configurée de manière à réaliser une fonction de centrage de la première portion d'arbre par rapport à la deuxième portion d'arbre.

4. Dispositif de pressurisation (30) selon la revendication précédente, **caractérisé en ce qu'**au moins un deuxième passage (51) est réalisé au travers des dents (50).

5. Dispositif de pressurisation (30) selon l'une des revendications 3 et 4, **caractérisé en ce que** les dents (50) sont espacées des unes des autres suivant une direction circonférentielle de manière à créer des espaces inter-dentaires vides formant des deuxièmes passages (51)

6. Dispositif de pressurisation (30) selon l'une des revendications 3 à 5, **caractérisé en ce que** les cannelures internes et externes (39, 41) ont une section transversale de forme et dimensions similaires et les dents (50) ont chacune une section transversale de forme et dimensions similaires.

7. Dispositif de pressurisation (30) selon l'une des revendications 4 à 6, **caractérisé en ce que** les premiers passages (46) et les deuxièmes passages (51) sont régulièrement réparties autour de l'axe longitudinal.

8. Dispositif de pressurisation (30) selon l'une des revendications 4 à 7, **caractérisé en ce que** la première portion d'arbre (9a) comprend au moins une ouverture (52) traversant sa paroi de part et d'autre, l'ouverture (52) étant située en aval du deuxième passage (51) et étant destinée à déboucher à l'intérieur de la première portion d'arbre (9a).

9. Dispositif de pressurisation (30) selon l'une des revendications précédentes, **caractérisé en ce qu'**il comprend un premier arbre comportant la première portion d'arbre (9a) et la deuxième portion d'arbre (9b), et un deuxième arbre (10) à l'intérieur duquel s'étend au moins en partie le premier arbre (9), le deuxième arbre (10) comprenant au moins un trou (53) traversant sa paroi de part et d'autre, le trou (53) étant destiné à être agencé à proximité de l'enceinte (20) aval de manière que le flux d'air de pressurisation en sortie du ou des orifice(s) (43) pénètre à l'intérieur de l'enceinte aval (20)

10. Turbomachine (1) d'aéronef comprenant une hélice (2) en rotation autour d'un axe longitudinal X, un générateur de gaz (3) destiné à entrainer l'hélice (2) en rotation, et un dispositif de pressurisation (30) d'une enceinte (20) aval selon l'une quelconque des revendications précédentes.

## Patentansprüche

1. Druckbeaufschlagungsvorrichtung (30) für eine stromabwärtige Kammer (20) eines Turbotriebwerks (1) mit einer Längsachse X, die mittels eines Druckbeaufschlagungsluftstroms (FP) versorgt wird, wobei die Vorrichtung (30) umfasst:
- einen ersten Wellenabschnitt (9a), der sich entlang der Längsachse X erstreckt,
- einen zweiten Wellenabschnitt (9b), der über innere Längsnuten (39), die vom ersten Wellenabschnitt (9a) getragen werden, und äußere Längsnuten (41), die vom zweiten Wellenabschnitt (9b) getragen werden, mit dem ersten Wellenabschnitt (9a) gekoppelt ist, wobei sich der zweite Wellenabschnitt (9b) mindestens zum Teil innerhalb des ersten Wellenabschnitts (9a) mit einem radialen Abstand entlang einer radialen Achse Z senkrecht zur Längsachse X erstreckt, wobei die inneren und die äußeren Nuten jeweils Seiten umfassen,
- mindestens einen ersten Durchgang (46), der durch die inneren und die äußeren Nuten (39, 41) hindurch hergestellt ist, und
- mindestens eine Öffnung (43), die auf beiden Seiten entlang der radialen Achse durch den zweiten Wellenabschnitt (9b) hindurchgeht,
**dadurch gekennzeichnet, dass** der Druckbeaufschlagungsstrom stromaufwärts des Turbotriebwerks entlang der Längsachse entnommen wird, wobei die Öffnung (43) stromaufwärts des ersten Durchgangs (46) angeordnet ist und einerseits mit dem ersten Durchgang (46) in strömungstechnischer Kommunikation steht und andererseits innerhalb des zweiten Wellenabschnitts (9b) mündet, um die Zirkulation des Druckbeaufschlagungsluftstroms (FP) vom ersten Durchgang (46) zwischen dem ersten Wellenabschnitt (9a) und dem zweiten Wellenabschnitt (9b), und anschließend durch die Öffnung (43) hindurch zur stromabwärtigen Kammer (20) des Turbotriebwerks zu ermöglichen, und dadurch, dass die inneren und die äußeren Nuten (39, 41) so konfiguriert sind, dass sie aneinandergrenzend entlang einer Umfangsrichtung Paare innerer und äußerer Nuten erzeugen mit Seiten, die miteinander in Kontakt stehen, und leeren Nutzwischenräumen, die erste Durchgänge (46) bilden.

2. Druckbeaufschlagungsvorrichtung (30) nach dem vorstehenden Anspruch, **dadurch gekennzeichnet, dass** die ersten Durchgänge (46) einen Winkelbereich (α) einnehmen, gemessen zwischen einer Seitenflanke einer inneren oder äußeren Nut und einer anderen Seitenflanke einer inneren oder äußeren Nut, die voneinander beabstandet sind, und der im Bereich zwischen 35° und 55° liegt.

3. Druckbeaufschlagungsvorrichtung (30) nach einem der vorstehenden Ansprüche, **dadurch gekennzeichnet, dass** der erste Wellenabschnitt (9a) oder der zweite Wellenabschnitt (9b) eine Reihe von Zähnen (50) umfasst, die stromabwärts der inneren und der äußeren Nuten angeordnet und so konfiguriert sind, dass sie eine Zentrierfunktion des ersten Wellenabschnitts in Bezug auf den zweiten Wellenabschnitt herstellen.

4. Druckbeaufschlagungsvorrichtung (30) nach dem vorstehenden Anspruch, **dadurch gekennzeichnet, dass** mindestens ein zweiter Durchgang (51) durch die Zähne (50) hindurch hergestellt ist.

5. Druckbeaufschlagungsvorrichtung (30) nach einem der Ansprüche 3 und 4, **dadurch gekennzeichnet, dass** die Zähne (50) entlang einer Umfangsrichtung voneinander beabstandet sind, sodass leere Zahnzwischenräume erzeugt werden, die zweite Durchgänge (51) bilden.

6. Druckbeaufschlagungsvorrichtung (30) nach einem der Ansprüche 3 bis 5, **dadurch gekennzeichnet, dass** die inneren und die äußeren Nuten (39, 41) einen Querschnitt ähnlicher Form und Abmessungen aufweisen und die Zähne (50) jeweils einen Querschnitt ähnlicher Form und Abmessungen aufweisen.

7. Druckbeaufschlagungsvorrichtung (30) nach einem der Ansprüche 4 bis 6, **dadurch gekennzeichnet, dass** die ersten Durchgänge (46) und die zweiten Durchgänge (51) gleichmäßig um die Längsachse herum verteilt sind.

8. Druckbeaufschlagungsvorrichtung (30) nach einem der Ansprüche 4 bis 7, **dadurch gekennzeichnet, dass** der erste Wellenabschnitt (9a) mindestens eine Öffnung (52) umfasst, die auf beiden Seiten durch seine Wand hindurchgeht, wobei sich die Öffnung (52) stromabwärts des zweiten Durchgangs (51) befindet und dazu bestimmt ist, innerhalb des ersten Wellenabschnitts (9a) zu münden.

9. Druckbeaufschlagungsvorrichtung (30) nach einem der vorstehenden Ansprüche, **dadurch gekennzeichnet, dass** sie eine erste Welle umfasst, die den ersten Wellenabschnitt (9a) und den zweiten Wellenabschnitt (9b) umfasst, und eine zweite Welle (10), innerhalb der sich die erste Welle (9) mindestens zum Teil erstreckt, wobei die zweite Welle (10) mindestens ein Loch (53) umfasst, das auf beiden Seiten durch ihre Wand hindurchgeht, wobei das Loch (53) dazu bestimmt ist, in der Nähe der stromabwärtigen Kammer (20) angeordnet zu werden, sodass der Druckbeaufschlagungsluftstrom am Ausgang der Öffnung(en) (43) in das Innere der stromabwärtigen Kammer (20) eindringt.

10. Flugzeug-Turbotriebwerk (1), das einen Propeller (2), der um eine Längsachse X dreht, einen Gasgenerator (3), der dazu bestimmt ist, den Propeller (2) drehend anzutreiben, und eine Druckbeaufschlagungsvorrichtung (30) für eine stromabwärtige Kammer (20) nach einem der vorstehenden Ansprüche umfasst.

## Claims

1. A device (30) for pressurising a downstream enclosure (20) of a turbomachine (1) with a longitudinal axis X, which is supplied by means of a pressurisation air flow (FP), the device (30) comprising:
- a first shaft segment (9a) extending along the longitudinal axis X,
- a second shaft segment (9b) coupled to the first shaft segment (9a) via longitudinal internal splines (39) carried by the first shaft segment (9a) and longitudinal external splines (41) carried by the second shaft segment (9b), the second shaft segment (9b) extending at least partly inside the first shaft segment (9a) with a radial distance along a radial axis Z perpendicular to the longitudinal axis X, the internal and external splines comprising faces respectively,
- at least one first passage (46) made through the internal and external splines (39, 41), and
- at least one orifice (43) passing through the second shaft segment (9b) on either side along the radial axis,
**characterized in that** the pressurisation air flow (FP) is collected upstream of the turbomachine along the longitudinal axis, the orifice (43) being arranged upstream of the first passage (46) and, on the one hand, being in fluidic communication with the first passage (46) and, on the other hand, opening out inside the second shaft segment (9b) so as to allow the circulation of the pressurisation air flow (FP) from the first passage (46) between the first shaft segment (9b) and the second shaft segment (9b), then through the orifice (43) towards the downstream enclosure (20) of the turbomachine and **in that** the internal and external splines (39, 41) are configured so as to create pairs of internal and external splines adjacently along a circumferential direction, with faces in contact with each other, and empty inter-spline spaces forming first passages (46).

2. The pressurising device (30) according to the preceding claim, **characterised in that** the first passages (46) occupy an angular range (α), measured between a lateral flank of an internal or external spline and another lateral flank of an internal or external spline which are spaced apart, and which is between 35° and 55°.

3. The pressurising device (30) according to any of the preceding claims, **characterised in that** the first shaft segment (9a) or the second shaft segment (9b) comprises a series of teeth (50) which are arranged downstream of the internal and external splines and configured so as to carry out a function of centring the first shaft segment with respect to the second shaft segment.

4. The pressurising device (30) according to the preceding claim, **characterised in that** at least one second passage (51) is made through the teeth (50).

5. The pressurising device (30) according to one of claims 3 and 4, **characterised in that** the teeth (50) are spaced apart from each other in a circumferential direction so as to create empty inter-tooth spaces forming second passages (51).

6. The pressurising device (30) according to any of claims 3 to 5, **characterised in that** the internal and external splines (39, 41) have a similar cross-sectional shape and dimensions and the teeth (50) each have a similar cross-sectional shape and dimensions.

7. The pressurising device (30) according to any of claims 4 to 6, **characterised in that** the first passages (46) and the second passages (51) are evenly distributed around the longitudinal axis.

8. The pressurising device (30) according to one of claims 4 to 7, **characterised in that** the first shaft segment (9a) comprises at least one opening (52) passing through its wall on either side, the opening (52) being located downstream of the second passage (51) and being intended to open out inside the first shaft segment (9a).

9. The pressurising device (30) according to one of the preceding claims, **characterised in that** it comprises a first shaft comprising the first shaft segment (9a) and the second shaft segment (9b), and a second shaft (10) within which the first shaft (9) extends at least partly, the second shaft (10) comprising at least one hole (53) passing through its wall on either side, the hole (53) being intended to be arranged in the vicinity of the downstream enclosure (20) in such a way that the pressurisation air flow leaving the orifice or orifices (43) penetrates inside the downstream enclosure (20).

10. An aircraft turbomachine (1) comprising a propeller (2) rotating about a longitudinal axis X, a gas generator (3) for driving the propeller (2) in rotation, and a device (30) for pressurising a downstream enclosure (20) according to any of the preceding claims.
